# EUROPÄISCHE PATENTSCHRIFT

(11) **EP 1 028 803 B1**
(45) Veröffentlichungstag und Bekanntmachung des Hinweises auf die Patenterteilung: **26.09.2001**
(21) Anmeldenummer: 98955561.0
(22) Anmeldetag: 10.11.1998
(51) Int. Cl.: B01J 19/00, B01J 4/00

(54) **VORRICHTUNG ZUM EINBRINGEN EINES FLUIDS IN EINEN BEHÄLTER**
DEVICE FOR FEEDING A FLUID INTO A CONTAINER
DISPOSITIF POUR INTRODUIRE UN FLUIDE DANS UN CONTENANT

(30) Priorität: 11.11.1997 DE 19749859
(43) Veröffentlichungstag der Anmeldung: 23.08.2000
(73) Patentinhaber: BASF AKTIENGESELLSCHAFT, 67056 Ludwigshafen (DE)
(72) Erfinder: FRIED, Michael, D-69121 Heidelberg (DE); NESTLER, Gerhard, D-67061 Ludwigshafen (DE)
(74) Vertreter: Isenbruck, Günter, Dr.
(86) Internationale Anmeldenummer: EP9807168
(87) Internationale Veröffentlichungsnummer: WO9924161

(56) Entgegenhaltungen:
- DE-A- 3 347 590
- DE-A- 4 222 007
- US-A- 3 557 243
- "APPARATUS FOR INTRODUCING A FLUID INTO A CONTAINER" RESEARCH DISCLOSURE, Nr. 405, Januar 1998, Seiten 29-36, XP000772359

## Beschreibung

Eine Vorrichtung zum Einbringen eines Fluids in einen Behälter wird insbesondere zur nachträglichen Stabilisierung von Stoffen verwendet, die üblicherweise in Behältern oder Lagertanks gelagert werden und die durch erhöhte Neigung zu unerwünschten chemischen Reaktionen, beispielsweise vorzeitige Polymerisation, oder sonstigen physikalischen Reaktionen, beispielsweise Kristallisation, ausgezeichnet sind.

Bekannt ist, daß bestimmte Stoffe oder Kombinationen von Stoffen in fester oder gelöster Form geeignet sind, die zu einem unerwünschten Zeitpunkt reagierenden polymerisierbaren Stoffe wieder zu stabilisieren. Diese Stoffe können in konventioneller Art und Weise in das Lagergut eingebracht und anschließend mit der für Tanklager-Einrichtungen üblichen Pumpe, die zum Zweck des Ein- und Austankens vorgesehen ist, mit dem Tankinhalt vermischt werden. Nachteilig ist hierbei, daß Pumpen selbst Ausgangspunkt einer vorzeitigen Polymerisation sein können, die eine Verstopfung der Pumpe hervorruft. Daher kann im Bedarfsfall die Mischaufgabe nicht mehr erfüllt werden. Nachteilig ist weiterhin die Abhängigkeit von einer äußeren Energiequelle zum Antrieb der Pumpe, die notfallbedingt oder zufällig nicht verfügbar sein kann, so daß kein Eintrag von Stabilistionsflüssigkeit erfolgen kann.

Um unabhängig von äußeren Energiequellen zu sein, wird daher auch ein Mischverfahren durch Einblasen von Gasen verwendet. Nachteilig ist, daß hierzu zusätzliche Einbauten im oder am Tank selbst vorgenommen werden müsse. In der Regel müssen solche Einbauten fest am Tank verankert werden, um während des normalen Betriebs nicht beschädigt oder abgerissen zu werden. Einbauten zum Eindrücken von Gasen befinden sich, um wirksam sein zu können, d.h. um auch eine gute Durchmischung zu erreichen, üblicherweise in Bodennähe des Tanks. Wenn diese Einbauten nicht in Benutzung sind, kann der reaktive Stoff in die Einbauten eindringen, und er wird dort wegen des geringen Stoffaustauschs allmählich polymerisieren, so daß die Gaseinspeisung im Bedarfsfall unbrauchbar wird. Daher wird oft ein geringer Luftstrom durch solche Leitungen geschickt, um diese Leitungen frei zu halten. Ein derartiger Luftstrom bedarf jedoch ebenfalls einer apparativen Überwachung, um das Zurücksteigen der in dem Tank gelagerten Flüssigkeit zu unterbinden und die Leitung offen zu halten. Solche Konstruktionen haben sich als kostenaufwendig erwiesen, um die ihnen zugedachte Aufgabe zuverlässig erfüllen zu können.

Die EP-B 0 064 628 beschreibt eine Einrichtung zur Notstoppung von Polymerisationsreaktionen in einem geschlossenen Reaktionsbehälter durch Zugabe von Inhibitorlösung. Die Zugabe erfolgt im unteren Bereich des Behälters über einen mit einer Berstscheibe verschlossenen Anschlußflansch. An diesem Anschlußflansch ist eine abgewinkelte Steigleitung zu einem oberen Flansch angebracht, an welchem eine Druckgasleitung angeschlossen ist. Die Steigleitung ist mit Inhibitorlösung gefüllt, welche im Bedarfsfall durch das Druckgas in den Behälter gedrückt wird.

Zwar soll die Funktionsfähigkeit der Einrichtung unabhängig von Polymerisationsanbackungen und Ausfall der Netzenergien sein, die für Sicherheitsvorrichtungen üblicherweise erforderliche regelmäßige Überwachung ist bei diesen abgetauchten Einbauten jedoch erschwert und eine Kontrolle der Berstscheibe kann nur bei entleertem Behälter durchgeführt werden. Dies bedeutet jedoch, daß der Tank während der Zeit der Reinigung und Überprüfung nicht benützbar ist.

Die genannten Nachteile werden vermieden durch eine Vorrichtung zum Einbringen eines Fluids in einen Behälter, umfassend eine in den Innenraum des Behälters führende, mit einer Berstscheibe verschlossenene und an eine Zuführungsleitung für das Fluid angeschlossene Zuführung, welche erfindungsgemäß als durch den Druck des Fluides in den Innenraum des Behälters ausfahrbares, über dem höchsten Füllstandsniveau des Behälters angebrachtes Teleskoprohr ausgebildet ist.

Bei der erfindungsgemäßen Vorrichtung taucht im Bedarfsfall das selbsttätig auslösende Teleskoprohr in das in dem Behälter befindliche Gut ein und trägt flüssige oder gasförmige Stoffe in das Gut hinein und vermischt die Stoffe gleichzeitig mit dem Gut. Das unter erhöhtem Druck stehende Fluid kann zum Zweck der Stabilisierung der in dem Behälter befindlichen Stoffe in den Behälter eingebracht werden und kann ein Gemisch aus einem Gas und einer Flüssigkeit sein.

Dadurch, daß die Vorrichtung über dem höchsten zulässigen Füllstand des Behälters eingebaut ist, kommt sie nur im Bedarfsfall mit dem im Behälter befindlichen Gut in Berührung, so daß die Funktionsfähigkeit durch das im Behälter befindliche Gut nicht beeinträchtigt wird.

Darüber hinaus kann die Vorrichtung zu jeder Zeit an dem Behälter angebracht bzw. entfernt werden, unabhängig davon, ob der Behälter in Betrieb ist oder nicht. Hierdurch kann eine regelmäßige Funktionsprüfung in einfacher Weise erfolgen. Aufgrund des Aufbaus der Vorrichtung kann diese ohne Veränderung der Baumaße in Behälter mit sehr unterschiedlichem Inhalt eingebaut werden, ohne daß die Wirksamkeit oder die Funktionsfähigkeit beeinflußt wird.

Ein unbeabsichtigtes Ausfahren des Teleskoprohrs kann dadurch vermieden werden, daß die Vorrichtung eine Arretiervorrichtung für das Teleskoprohr umfaßt, die das Teleskoprohr im Ausgangszustand in einem eingeschobenen Zustand hält.

Vorteilhaft umfaßt die Arretiervorrichtung Mittel zum Lösen der Arretierung des Teleskoprohrs, die durch den Druck des einzubringenden Fluids betätigbar sind.

Eine besonders einfache Lösung hierfür besteht darin, daß diese Mittel einen in einer Kolbenkammer geführten Kolben umfassen.

Eine besonders sichere Arretierung kann dadurch erreicht werden, daß die Mittel Rastnocken umfassen, die mit Öffnungen eines zentralen Innenrohres des Teleskoprohrs zusammenwirken.

Das Lösen der Arretierung wird dann dadurch erleichtert, daß der Kolben Aussparungen zur teilweisen Aufnahme der Rastnocken aufweist, wobei beim Verschieben des Kolbens die Rastnocken aus den Aussparungen heraustreten.

Eine besonders sichere Funktionsweise resultiert hierfür, wenn die Rastnocken an einem federbelasteten Hebel angebracht sind und einen Haltebereich und einen Gleitbereich für das Innenrohr aufweisen.

Eine erfindungsgemäße Vorrichtung ist in der Zeichnung dargestellt. Es zeigt die
- Fig. 1: eine schematische Darstellung einer in einer Behälterwand eingebauten Vorrichtung mit einem eingefahrenen Teleskoprohr im Schnitt, die
- Fig. 2: das Teleskoprohr in einem bereits ein Stück weit ausgefahrenen Zustand, die
- Fig. 3: ein Detail einer Arretiervorrichtung für das Teleskoprohr und die
- Fig. 4: die Vorrichtung mit dem vollständig aus dem Gehäuserohr ausgefahrenen ersten Innenrohr des Teleskoprohrs.

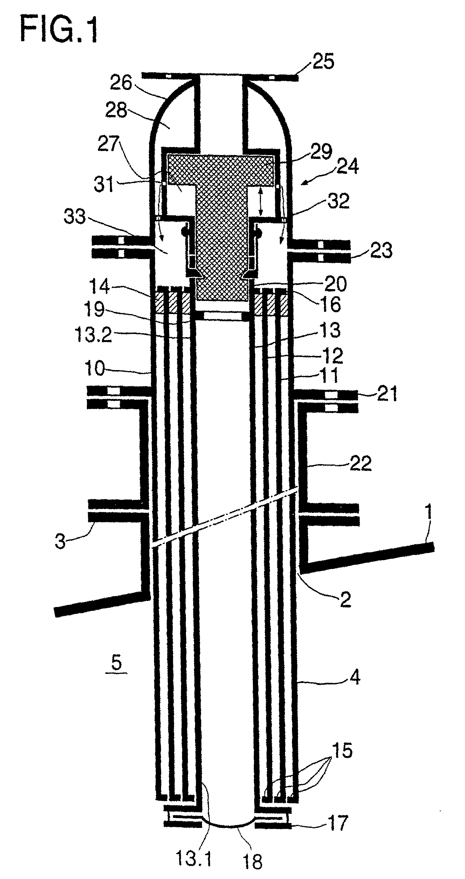

Die Fig. 1 ist eine schematische Darstellung einer in einer Behälterwand 1 eingebauten erfindungsgemäßen Vorrichtung im Schnitt. Die Behälterwand 1 weist eine Öffnung 2 mit einem vertikalen Anschlußflansch 3 auf. Durch die Öffnung 2 ragt ein Teleskoprohr 4 der Vorrichtung zum Einbringen von Fluid in den Innenraum 5 des durch die Behälterwand 1 begrenzten Behälters.

Das Teleskoprohr 4 besteht aus einem äußeren Gehäuserohr 10 und drei Innenrohren 11 - 13, die jeweils über Dichtungen 14 gegeneinander abgedichtet sind. Die Innenrohre 11 - 13 verfügen an ihren Enden über Halteringe 15, 16, die die axiale Bewegung der Innenrohre 11 - 13 beim Ausziehen begrenzen.

Das zentrale Innenrohr 13 ist an seinem im Innenraum 5 befindlichen Ende 13.1 mit einer Halterung 17 für eine Berstscheibe 18 versehen. Außerdem ist die Halterung 17 so weit nach außen gerührt, daß die anderen Innenrohre 11, 12 aufsitzen können. Am anderen Ende 13.2 weist das Innenrohr 13 einen innenliegenden Bund 19 und einen sich über den Haltering 16 erstreckenden Fortsatz 20 auf, dessen Funktion später erläutert wird.

Das Gehäuserohr 10 ist mit einem Tragflansch 21 zur Befestigung an dem Flansch 3 der Behälterwand 1 versehen, wobei die Befestigung direkt oder unter Verwendung eines Zwischenflansches 22 erfolgen kann. Weiterhin weist das Gehäuserohr 10 einen zweiten Flansch 23 zur Befestigung einer Arretiervorrichtung 24 auf. An diese Arretiervorrichtung wird über einen Rohrleitungsflansch 25 eine nicht dargestellte Zuführungsleitung für das in den Innenraum 5 einzubringenden Fluid angeschlossen.

Die Arretiervorrichtung 24 umfaßt ein Gehäuse 26, das eine strömungstechnisch direkt mit dem Rohrleitungsflansch 25 verbundene Kolbenkammer 27 unter Bildung eines Innenraums 28 umschließt. In der Kolbenkammer 27 ist ein Kolben 29 angeordnet, der sich im Ausgangszustand in einer dem Rohrleitungsflansch 25 zugewandten Lage innerhalb der Kolbenkammer 27 befindet.

Die Kolbenkammer 27 weist in dem nicht von dem Kolben 29 überdeckten Bereich eine Öffnung 31 auf, über welche eine strömungstechnische Verbindung mit dem Innenraum 28 hergestellt ist. Diese Öffnung 31, die als Schlitz ausgebildet sein kann, wird erst freigegeben, wenn der Kolben 29 in eine untere Position gelangt ist.

Der Innenraum 28 ist über eine weitere Öffnung 32 mit einer von der Arretiervorrichtung 24 und den innerhalb des Gehäuserohrs 10 befindlichen Innenrohren 11-13 begrenzten Druckkammer 33 verbunden, von welcher die Bewegung der Innenrohre 11-13 unter Beaufschlagung mit unter Druck stehendem Fluid ausgeht. Die strömungstechnische Verbindung ist durch die Pfeile angedeutet.

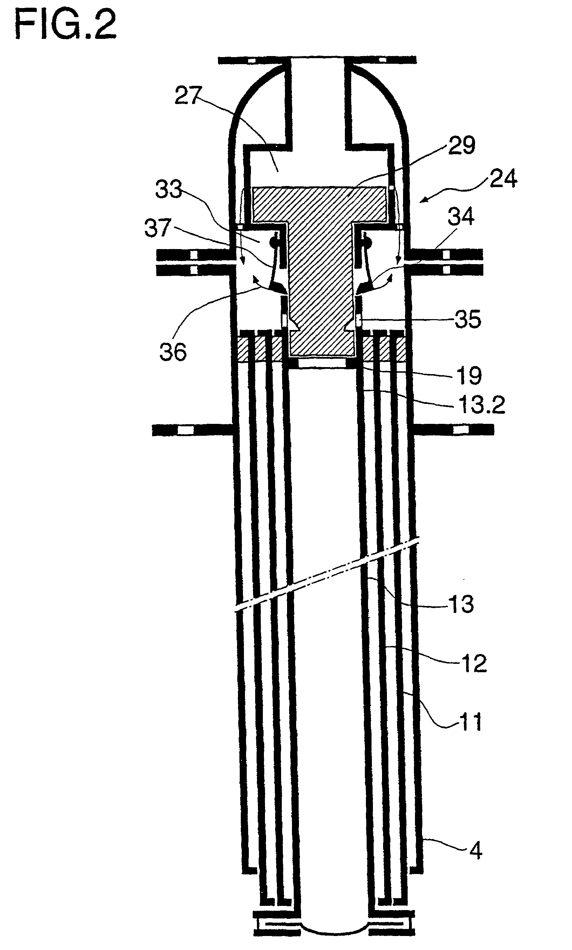

In der Druckkammer 33 sind weiterhin Mittel zur Arretierung und zum Lösen der Innenrohre 11-13 angebracht, die in der Fig. 2 näher erläutert werden.

In Fig. 2 ist das Teleskoprohr 4 in einem bereits ein Stück weit ausgefahrenen Zustand dargestellt. Dazu wurde die Arretiervorrichtung 24 bereits betätigt, so daß sich der Kolben 29 in einer unteren Stellung innerhalb der Kolbenkammer 27 befindet. Durch die Axialverschiebung 1des Kolbens 29 wurde der Eingriff von in der Druckkammer 33 befindlichen Rastnocken 34 in Rastöffnungen 35 des oberen Endes 13.2 des zentralen Innenrohres 13 gelöst. Diese Lösungsbewegung wird durch die Pfeile 36 angedeutet.

Weiterhin ist der Kolben 29 während seiner Axialverschiebung bereits zur Anlage an den innenliegenden Bund 19 gekommen und hat die Auszugsbewegung der Innenrohre 11-13 unterstützt.

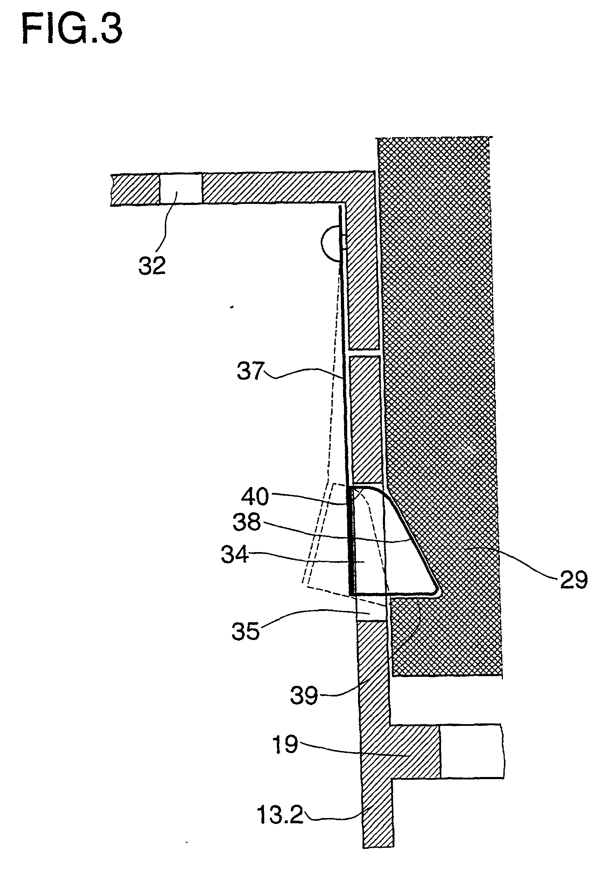

Um diese Lösung zu ermöglichen, sind die Rastnocken 34 auf Federzungen 37 angebracht und weisen eine dem Kolben 29 zugewandte, in Bewegungsrichtung abgeschrägte Fläche 38 auf, vergrößert dargestellt in Fig. 3. Die Rastnocken 34 greifen in verriegelter Stellung durch die Rastöffnungen 35 des oberen Endes 13.2 des Innenrohres 13 und dringen ein Stück weit in eine Aussparung 39 des Kolbens 29 ein. Die Aussparung 39 hat eine den Rastnocken entsprechende Form, so daß der Rastnocken auf seiner abgeschrägten Fläche 38 bei der Axialverschiebung des Kolbens aus der Ausnehmung 39 gleitet. Um die Reibung zu verringern, kann der Rastnocken 34 aus PTFE (Polytetrafluorethylen) bestehen. Die Rastöffnungen 35 sind im Ausführungsbeispiel schlitzartige, in den oberen Abschnitt des zentralen Innenrohres 13 eingefräste Öffnungen.

Um ein unbeabsichtigtes Herausgleiten der Rastnocken 34 unter der Schwerkrafteinwirkung des Kolbens 29 zu verhindern, kann der Rastnocken auf einer entsprechend steifen Federzunge 37, oder einem federbelasteten Hebel, angeordnet sein. Die Vorspannung der Federzunge 37 ist so gewählt, daß die auf die abgeschrägte Fläche 38 wirkende Gewichtskraft des Kolbens 29 mindestens ausgeglichen wird.

Da der Rastnocken auch das gesamte Gewicht der Innenrohre 11-13 tragen muß, weist er zusätzlich zu dem von der abgeschrägten Fläche 38 gebildeten Gleitbereich einen Haltebereich mit einer geraden Fläche 40 auf, die mit einer entsprechenden Fläche der Rastöffnungen 35 zusammenwirkt. Durch das Herausgleiten des Rastnockens 34 aus der Ausnehmung 39 in dem Kolben 29 wird die gerade Fläche 40 außer Eingriff gebracht und das Innenrohr 13 kann ebenfalls entlang der abgeschrägten Fläche 38 unter dem Rastnocken 34 vorbeigleiten. Dabei wird die Bewegung der Innenrohre 11-13 durch die Anlage des Kolbens 29 während seiner Axialverschiebung an dem innenliegenden Bund 19 am Anfang unterstützt und die Auszugsbewegung wird initiiert.

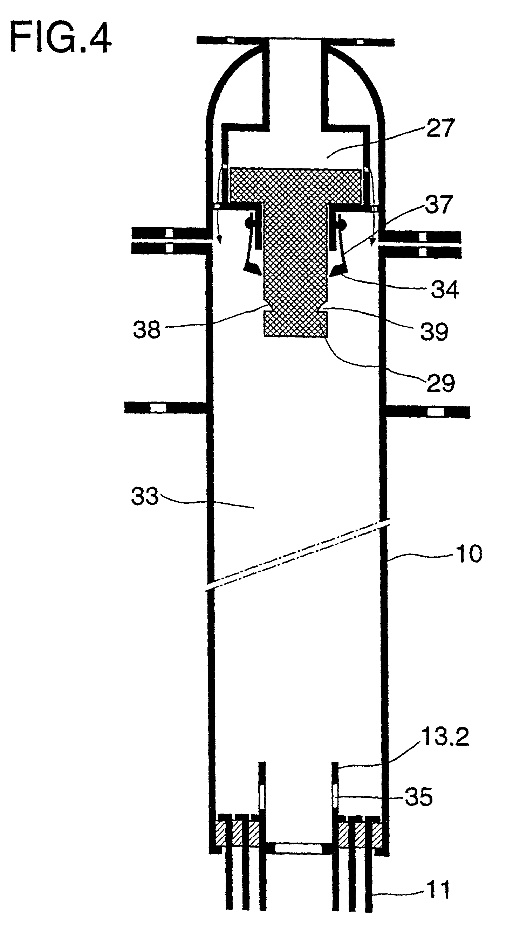

In Fig. 4 wird die Vorrichtung mit dem vollständig aus dem Gehäuserohr 10 ausgefahrenen äußersten Innenrohr 11 gezeigt. Das Volumen der Druckkammer 33 hat sich durch die Beaufschlagung von unter erhöhtem Druck stehenden Fluid ständig vergrößert.

Der Verriegelungsmechanismus hat in Fig. 4 das zentrale Innenrohr 13 vollständig freigegeben, dessen Ende 13.2 mit der Öffnung 35 nun am unteren Ende des Gehäuserohres 10 liegt. Deutlich erkennt man, daß durch die Verschiebung des Kolbens 29 innerhalb der Kolbenkammer 27 in eine untere Position die Rastnocken 34 aus den Ausnehmung 39 des Kolbens 29 herausgetreten sind. Die abgeschrägte Fläche 38 des Rastnockens 34 und die entsprechende Fläche der Ausnehmung 39 erleichtern dieses Herausgleiten gegen die Federkraft der Federzunge 37.

Die erfindungsgemäße Vorrichtung wird über eine an den Rohrleitungsflansch 25 angeschlossene nicht dargestellte Zuführungsleitung mit dem einzubringenden Fluid beschickt. Eine bestimmte Menge dieses Fluids steht unter einem bestimmten Druck in einem Vorratsgefäß bereit und wird erst im Gefahrenfall an die Zuführungsleitung angeschlossen. In der Regel ist das einzubringende Fluid eine Flüssigkeit, die sich in einem Druckbehälter befindet. Dieser Druckbehälter kann ein konventioneller Feuerlöschbehälter mit einer fest verbundenen Treibgasflasche sein. Durch das Öffnen der Treibgasflasche wird erst die Flüssigkeit aus dem Druckbehälter ausgetrieben und durch das Teleskoprohr 4 in den Tankinhalt eingebracht. Das nachströmende überschüssige Gas bewirkt durch die vertikalen Strömungen, die durch aufsteigende Gasblasen erzeugt werden, eine intensive Durchmischung der Tankflüssigkeit mit dem injizierten Fluid. Es ist dabei ausreichend, wenn der Druckbehälter unmittelbar vor dem Öffnen der Gasflasche mit einer Schnellkupplung an das Zuführungsrohr angeschlossen wird.

Wird das Vorratsgefäß betätigt, so überträgt sich der in dem Vorratsgefäß herrschende Druck auf den Kolben 29 in der Kolbenkammer 27. Durch die auf den Kolben 29 einwirkende Kraft bewegt sich der Kolben 29, eventuell gegen die Federkraft einer nicht dargestellten Druckfeder, in der Kolbenkammer 27.

Dabei wird zunächst der Rastnocken 34 aus der Ausnehmung 39 herausgedrückt und somit die Arretierung gelöst, andererseits setzt der Kolben 29 auf dem Haltering 19 auf und schiebt das zentrale Innenrohr 13 unter den Rastnocken 34 hindurch, die dabei aus den Rastöffnungen 35 heraustreten.

Sobald der Kolben 29 den unteren Haltepunkt in der Kolbenkammer 27 erreicht hat, strömt Gas und/oder Flüssigkeit über die horizontalen Öffnungen 31 in den seitlichen Innenraum 28 und über weitere Öffnungen 32 in eine Druckkammer 33 oberhalb der beweglichen Innenrohre 11-13. Die Kraft des anstehenden Druckes wird nun auf die obere Stirnfläche der Innenrohre 11-13 übertragen, wobei die Dichtungen 14 zwischen den Innenrohren 11-13 und dem Gehäuserohr 10 und die auf einen bestimmten Gasdruck eingestellte Berstscheibe 18 am unteren Ende 13.1 des zentralen Innenrohres 13 ein Entweichen des Druckes in den Behälter verhindern.

Das Bestreben des sich in der Druckkammer 33 befindlichen, unter Druck stehenden Fluids sich auszudehnen, bewegt die Innenrohre 11-13 allmählich nach unten. Dabei werden infolge des größeren Umfangs und damit der größeren Angriffsfläche aller äußeren Innenrohre 11, 12 zunächst diese nach unten bewegt. Da die äußeren Innenrohre 11, 12 auf der Halterung 17 aufsitzen, wird auch das zentrale Innenrohr 13 zusammen mit diesen nach unten bewegt. Wenn das äußerste Innenrohr 11 mit seinem Haltering 16 auf dem Haltering 15 des Gehäuserohrs 10 aufliegt, dehnt sich das Volumen der Druckkammer 33 durch die Abwärtsbewegung der nächsten Innenrohre 12, 13 aus und treibt diese nach unten. Die Ausdehnung des Volumens der Druckkammer 33 kommt zum Stehen, wenn alle Innenrohre 11-13 den unteren Haltepunkt erreicht haben oder das zentrale Innenrohr 13 auf dem Behälterboden aufliegt. Gegebenenfalls kann ein nicht dargestellter Abstandshalter vorgesehen werden, der ein Abdecken des unteren Endes durch den Behälterboden vermeidet.

Da nunmehr eine weitere Ausdehnung der mit Fluid gefüllten Druckkammer 33 nicht mehr erfolgen kann, baut sich allmächlich ein Druck auf. Wenn der zur Zerstörung der Berstscheibe 18 erforderliche Höchstdruck erreicht ist, entspannt sich das in der Druckkammer 33 befindliche Fluid durch die Teleskoprohre 4 in den Behälterinnenraum 5.

Handelt es sich bei dem weiter nachströmenden Fluid um ein Gemisch aus Flüssigkeit und Gas, so vermischt das weiter nachströmende Gas die eingepreßte Flüssigkeit mit dem Inhalt des Behälters.

Die Vorrichtung wird mittels des Tragflansches 21 auf dem Tankflansch 3 befestigt. Zur Anbringung im gewünschten Abstand oberhalb des höchsten Flüssigkeitsniveaus innerhalb des Behälters können Zwischenflansche 22 unterschiedlicher Höhe verwendet werden. Da Großbehälter mit zunehmendem Volumen eine Bauweise mit quadratischem Querschnitt bevorzugen, betrifft der bevorzugte Verwendungsbereich der Erfindung Behälter mit einem Volumen von 20 bis 1000 m³, entsprechend einer Teleskopausdehnung von 3 bis 11 Meter. Die Vorrichtung erlaubt in Verbindung mit geeigneten Behältern zur Aufnahme der Stabilisatorflüssigkeit und geeigneten Schnellkupplungen kostengünstige, zuverlässig arbeitende und wartungsarme Sicherheitseinrichtungen insbesondere für die Lagerung reaktiver Stoffe.

Im besonderem Maße eignet sich die Vorrichtung zur Durchführung eines Verfahrens zur Sofortbeendigung von radikalischen Polymerisationen durch Zusatz einer Phenothiazin enthaltenden Inhibitorlösung zum radikalisch polymerisierenden System, wobei das Lösungsmittel der Inhibitorlösung zu wenigstens 50 % seines Gewichtes aus einem N-Alkylpyrrolidon besteht. Das N-Alkylpyrrolidon kann dabei N-Methylpyrrolidon und/oder N-Ethylpyrrolidon sein.

Weiterhin ist es vorteilhaft, wenn der Phenothiazingehalt der Inhibitorlösung, bezogen auf das Gewicht der Inhibitorlösung, wenigstens 10 Gew.-%, bevorzugt etwa 35 - 45 Gew.-% beträgt.

Die Vorrichtung ist insbesondere dann vorteilhaft einsetzbar, wenn es sich bei dem radikalisch polymerisierenden System um in Substanz radikalisch polymerisierende (Meth)acrylmonomere handelt, wobei das (Meth)acrylmonomer eine (Meth)acrylsäure und insbesondere ein (Meth)acrylsäureester sein kann.

## Patentansprüche

1. Vorrichtung zum Einbringen eines Fluids in einen Behälter, umfassend eine in den Innenraum (5) des Behälters (1) führende, mit einer Berstscheibe (18) verschlossene und an eine Zuführungsleitung für das Fluid angeschlossene Zuführung, **dadurch gekennzeichnet, daß** die Zuführung als durch den Druck des Fluides in den Innenraum (5) des Behälters (1) ausfahrbares, über dem höchsten Füllstandsniveau des Behälters (1) angebrachtes Teleskoprohr (4) ausgebildet ist.

2. Vorrichtung nach Anspruch 1, **dadurch gekennzeichnet, daß** die Vorrichtung eine Arretiervorrichtung (24) für das Teleskoprohr (4) umfaßt, die das Teleskoprohr (4) im Ausgangszustand in einem eingeschobenen Zustand hält.

3. Vorrichtung nach Anspruch 2, **dadurch gekennzeichnet, daß** die Arretiervorrichtung (24) Mittel (26-40) zum Lösen der Arretierung des Teleskoprohrs (4) umfaßt, die durch den Druck des einzubringenden Fluids betätigbar sind.

4. Vorrichtung nach Anspruch 3, **dadurch gekennzeichnet, daß** die Mittel (26-40) einen in einer Kolbenkammer (27) geführten Kolben (29) umfassen.

5. Vorrichtung nach Anspruch 3 oder 4, **dadurch gekennzeichnet, daß** die Mittel (26-40) Rastnocken (34) umfassen, die mit Öffnungen (35) eines zentralen Innnenrohres (13) des Teleskoprohrs (4) zusammenwirken.

6. Vorrichtung nach Anspruch 5, **dadurch gekennzeichnet, daß** der Kolben (29) Aussparungen (39) zur teilweisen Aufnahme der Rastnocken (34) aufweist, wobei beim Verschieben des Kolbens (29) die Rastnocken (34) aus den Aussparungen (39) heraustreten.

7. Vorrichtung nach Anspruch 6, **dadurch gekennzeichnet, daß** die Rastnocken (34) an einem federbelasteten Hebel (37) angebracht sind und einen Haltebereich (40) und einen Gleitbereich (39) für das Innnenrohr (13) aufweisen.

## Claims

1. Apparatus for introducing a fluid into a container, comprising a supply leading into the interior (5) of the container (1), closed by a bursting disk (18) and connected to a supply line for the fluid, wherein the supply is in the form of a telescopic tube (4) which can be extended by the pressure of the fluid into the interior (5) of the container (1) and is mounted above the highest level in the container (1).

2. Apparatus as claimed in claim 1, which comprises a locking apparatus (24) for the telescopic tube (4), which apparatus (24) initially holds the telescopic tube (4) in a retracted state.

3. Apparatus as claimed in claim 2, wherein the locking apparatus (24) comprises means (26-40) for releasing the telescopic tube (4), which means can be actuated by the pressure of the fluid to be introduced.

4. Apparatus as claimed in claim 3, wherein the means (26-40) comprise a piston (29) guided in a piston chamber (27).

5. Apparatus as claimed in claim 3 or 4, wherein the means (26-40) comprise catches (34) which interact with openings (35) in a central inner tube (13) of the telescopic tube (4).

6. Apparatus as claimed in claim 5, wherein the piston (29) has recesses (39) for partially receiving the catches (34), the catches (34) coming out of the recesses (39) on displacement of the piston (29).

7. Apparatus as claimed in claim 6, wherein the catches (34) are mounted on a spring-loaded lever (37) and have a retaining region (40) and a sliding region (39) for the inner tube (13).

## Revendications

1. Dispositif pour introduire un fluide dans un conteneur comprenant une amenée conduisant à l'intérieur (5) du conteneur (1) comprenant un disque claquant (18) verrouillé et reliée à une conduite d'amenée pour le fluide, **caractérisé en ce que** l'amenée est conformée comme un tuyau télescopique (4) placé au-dessus du niveau de remplissage supérieur du conteneur (1) pouvant être mû par la pression du fluide à l'intérieur (5) du conteneur (1).

2. Dispositif selon la revendication 1, **caractérisé en ce que** le dispositif comprend un dispositif de blocage (24) pour le tuyau télescopique (4) qui maintient le tuyau télescopique (4) en position de sortie dans une position insérée.

3. Dispositif selon la revendication 2, **caractérisé en ce que** le dispositif de blocage (24) comprend des moyens (26-40) pour libérer le blocage du tuyau télescopique (4) qui peuvent être actionnés par la pression du fluide à introduire.

4. Dispositif selon la revendication 3, **caractérisé en ce que** les moyens (26-40) comprennent un piston (29) guidé dans une chambre (27) à piston.

5. Dispositif selon la revendication 3 ou 4, **caractérisé en ce que** les moyens (26-40) comprennent des cames d'arrêt (34) qui coopèrent avec les ouvertures (35) d'un tuyau intérieur (13) central du tuyau télescopique (4).

6. Dispositif selon la revendication 5, **caractérisé en ce que** le piston (29) présente des évidements (39) pour recevoir en partie les cames d'arrêt (34), les cames d'arrêt (34) sortant des évidements (39) lors du déplacement du piston (29).

7. Dispositif selon la revendication 5, **caractérisé en ce que** les cames d'arrêt (34) sont disposées sur un levier (37) à ressort et présentent une région d'arrêt (40) et une région de glissement (39) pour le tuyau intérieur (13).
